# FASCICULE DE BREVET EUROPEEN

(11) **EP 0 981 565 B1**
(45) Date de publication et mention de la délivrance du brevet: **03.12.2003**
(21) Numéro de dépôt: 99909001.2
(22) Date de dépôt: 10.03.1999
(51) Int. Cl.: C08G 18/69, C08F 283/00

(54) **COMPOSITIONS STABLES AU STOCKAGE PERMETTANT D'OBTENIR DES REVETEMENTS ELASTOMERES**
LAGERSTABILE ZUSAMMENSETZUNGEN ZUR HERSTELLUNG ELASTOMERER BESCHICHTUNGEN
STORAGE STABLE COMPOSITIONS FOR OBTAINING ELASTOMER COATINGS

(30) Priorité: 12.03.1998 FR 9803039
(43) Date de publication de la demande: 01.03.2000
(73) Titulaire: Atofina, 92800 Puteaux (FR)
(72) Inventeur: FLAT, Jean-Jacques, F-27470 Serquigny (FR)
(74) Mandataire: Chaillot, Geneviève
(86) Numéro de dépôt international: FR9900534
(87) Numéro de publication internationale: WO99046312

(56) Documents cités:
- EP-A- 0 283 968
- US-A- 4 295 909
- US-A- 4 587 201
- DATABASE WPI Section Ch, Week 8531 Derwent Publications Ltd., London, GB; Class A12, AN 85-185913 XP002082553 & JP 60 112648 A (NITTO ELECTRIC IND CO) , 19 juin 1985
- DATABASE WPI Section Ch, Week 9445 Derwent Publications Ltd., London, GB; Class A12, AN 94-363602 XP002082554 & JP 06 287249 A (IDEMITSU PETROCHEM CO) , 11 octobre 1994 cité dans la demande

## Description

La présente invention concerne un élastomère obtenu par polymérisation radicalaire d'une composition liquide de basse viscosité à base d'un oligomère hydroxylé de diène.

On connaît déjà de JP-A-06 28 72 49 des compositions liquides de basse viscosité à base de polydiène à terminaisons hydroxylées, d'amorceurs de polymérisation et de diluants réactifs contenant de 2 à 3 groupes (méth)acrylate par molécule et ayant une masse molaire de 250 à 1000 g/mol. Ces compositions sont réticulées thermiquement pour donner des polymères utilisés comme revêtement ou adhésifs. Ces polymères ont cependant l'inconvénient d'avoir un comportement fragile, d'être peu élastomères, et d'avoir des résistances à la pliure et des valeurs d'allongement à la rupture très faibles.

Le but de la présente invention est d'obtenir une composition liquide de basse viscosité à base d'un oligomère hydroxylé de diène ayant une bonne stabilité au stockage. Cette composition doit notamment pouvoir être utilisée, sans mettre en oeuvre d'isocyanate, comme revêtement de surface métallique ou de surface plastique. Par polymérisation radicalaire thermique ou photochimique elle doit conduire à un élastomère qui ne présente pas les inconvénients rapportés ci-dessus.

Ce but est atteint en préparant tout d'abord un prépolymère hydroxylé obtenu par condensation d'un oligomère de diène à terminaisons hydroxylées mélangé éventuellement à un allongeur de chaîne, notamment un diol, avec un composé polyisocyanate dans un rapport en poids tel que le rapport de la concentration molaire des groupes isocyanate (-N=C=O) sur la concentration molaire des groupes hydroxyle (-OH) soit de 0,05 à la valeur q ; q étant choisi de façon à ne pas atteindre la gélification du prépolymère ; ce rapport étant déterminé en tenant compte de la présence éventuelle de l'allongeur de chaîne.

Le prépolymère obtenu comporte un squelette insaturé de type polydiène, des groupes uréthanes reliant plusieurs squelettes carbonés des molécules initiales et d'oligomères hydroxylés de diène. Ce prépolymère est statistiquement fonctionnalisé en bout de chaîne par des groupes hydroxyle, car le polyisocyanate est mis à réagir dans des quantités telles que les fonctions isocyanates (-N=C=O) sont en défaut par rapport aux groupes hydroxyle présents.

Une composition stable au stockage à base de ce prépolymère et apte à donner un polymère élastomérique par réticulation radicalaire thermique ou photochimique, se caractérise par la teneur des constituants suivants :
- 100 parties en poids du prépolymère uréthane obtenu par condensation d'un oligomère hydroxylé de diène mélangé éventuellement à un allongeur de chaîne, avec un composé polyisocyanate dans un rapport en poids tel que le rapport de la concentration molaire des groupes isocyanate (-N=C=O) sur la concentration molaire des groupes hydroxyle (-OH), soit de 0,05 à la valeur q , cette valeur q étant choisie de façon à ne pas atteindre la gélification du prépolymère,
- de 1 à 200 parties en poids d'oligomères acrylates,
- de 1 à 100 parties en poids de monomères acrylates,
- de 0 à 100 parties en poids de plastifiants,
- de 0 à 10 parties en poids d'additifs,
- de 0,1 à 5 parties en poids d'amorceur radicalaire.

Cette composition stable dans les conditions usuelles de stockage (de la température ambiante à 60°C par exemple) a l'avantage de conduire après réticulation thermique ou photochimique à un polymère élastomérique sans que la réticulation proprement dite ne nécessite l'ajout d'un polyisocyanate.

Ainsi l'utilisateur final de la composition n'aura pas à utiliser lui-même un composé polyisocyanate, ce qui présente l'avantage de ne pas manipuler ce type de composés connus pour leur toxicité.

De préférence, la composition se caractérise en ce que la teneur des constituants est :
- de 100 parties en poids dudit prépolymère uréthane,
- de 50 à 100 parties en poids d'oligomère(s) acrylate(s),
- de 10 à 50 parties en poids de monomère(s) acrylate(s),
- de 0 à 100 parties en poids de plastifiants,
- de 0 à 5 parties en poids d'additifs,
- de 0,1 à 5 parties en poids d'amorceur radicalaire.

La gélification du prépolymère est définie par la perte de son aptitude à s'écouler.

Les constituants ci-dessus sont définis de la manière suivante :
a) les oligomères de diène à terminaisons hydroxylées encore dénommés polydiènes-polyols pouvant être utilisés selon la présente invention, comprennent les oligomères de diène conjugué hydroxytéléchique pouvant être obtenus par différents procédés.

Parmi ces procédés, on peut citer la polymérisation radicalaire de diènes conjugués ayant de 4 à 20 atomes de carbone en présence de peroxyde d'hydrogène ou éventuellement d'un composé azoïque tel que l'azobis-2,2'-[méthyl-2-N-(hydroxy-2-éthyl)propionamide] ou encore la polymérisation anionique du diène conjugué ayant de 4 à 20 atomes de carbone en présence de formaldéhyde ou d'oxyde d'éthylène et d'un catalyseur basique tel que le naphtalènelithium ou le sec-butyl lithium.

Selon la présente invention, le diène conjugué pour obtenir le polydiène-polyol est choisi dans le groupe comprenant le butadiène, l'isoprène, le chloroprène, le pentadiène-1, 3, le cyclopentadiène. La masse molaire moyenne en nombre (Mₙ) des polydiènes-polyols utilisables peut varier de 500 à 15 000 g/mol et est de préférence de 1 000 à 5 000 g/mol.

Avantageusement, on utilise un polydiène à base de butadiène. De préférence, le polydiène-polyol a les caractéristiques suivantes :
Il comprend de 70 à 85 % en mole, de préférence 80 % de motifs

―(―CH₂―CH=CH―CH₂―)―

et de 15 à 30 % en mole, de préférence 20 % de motifs

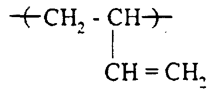

Parmi les polydiènes-polvols conviennent également les copolymères hydroxylés de diènes conjugués et de monomère vinylique et acrylique tels que, par exemple, le styrène et/ou l'acrylonitrile.

On ne sortirait pas de l'invention si on utilisait des oligomères hydroxytéléchiques de butadiène époxydés sur la chaîne.

Les polydiènes-polyols ont un indice d'hydroxy, exprimé en meq/g, compris entre 0,5 et 5 et leur viscosité est comprise entre 1 000 et 100 000 mPa.s à 30°C.

A titre d'illustration de polydiènes-polyols utilisables dans la présente invention, on peut citer les polybutadiènes à terminaisons hydroxylées, commercialisés par la Société ELF ATOCHEM S.A. sous les dénominations Poly Bd® R-45HT et Poly Bd® R-20LM.

Selon la présente invention, le composé polyisocyanate utilisé peut être un composé aromatique, aliphatique ou cycloaliphatique ayant au moins deux fonctions isocyanates dans sa molécule.

A titre d'illustration de diisocyanate aromatique, on peut citer le 4,4'-diphénylméthanediisocyanate (MDI), les MDI modifiés liquides, les MDI polymériques, le 2,4- et le 2,6-toluènediisocyanate (TDI) ainsi que leur mélange, le xytènediisocyanate (XDI), le tétraméthylxylènediisocyanate (TMXDI), le paraphénylènediisocyanate (PPIDI), le naphtalènediisocyanate (NDI).

Parmi les diisocyanates aromatiques, l'invention concerne de préférence le 4,4'-diphénytméthanediisocyanate. Dans ce cas particulier, le rapport molaire NCO/OH est avantageusement de 0,05 à 0,60.

A titre d'illustration de polyisocyanate aliphatique, on peut citer l'hexaméthylènediisocyanate (HDI) et ses dérivés (isocyanate, biuret), le triméthyl-hexaméthylènediisocyanate (HMDI).

A titre d'illustration de polyisocyanate cycloaliphatique, on peut citer l'isophoronediisocyanate (IPDI) et ses dérivés, le 4,4'-dicyclohexyiméthanediisocyanate (H₁₂MDI) et le cyclohexyldiisocyanate (CHDI).

Selon l'invention, l'allongeur de chaîne peut être choisi parmi les diols. Leur masse moléculaire peut être comprise entre 62 et 500 g/mol.

A titre d'illustration de tels composés, on citera l'éthylène glycol, le propylène glycol, le diéthylène glycol, le dipropylène glycol, le 1,4-butanediol, le 1,6-hexanediol, le 2-éthyl-1,3 hexanediol, le N,N bis(hydroxy-2 propyl)aniline, le 3-méthyl-1,5-pentanediol et le mélange d'au moins deux des composés précités.

Avantageusement, le diol ou le mélange d'au moins deux de ces diols peut être présent jusqu'à 50 parties en poids.

On peut également utiliser comme allongeurs de chaîne des polyamines. Leur masse moléculaire peut être comprise entre 60 et 500 g/mol.

A titre d'illustration de telles polyamines, on citera l'éthylène diamine, la diphényl méthane diamine, l'isophoronediamine, l'hexaméthylenediamine, la diéthyltoluènediamine.

Avantageusement, les oligomères polyacrylates sont choisis avec des masses molaires en nombre Mₙ allant de 100 à 5 000 g/mol. Ces oligomères sont par exemple des uréthane-acrylates, des époxy-acrylates.

Les monomères (méth)acrylates sont avantageusement choisis parmi les acrylates et méthacrylates d'alkyle mono, di, tri ou tétrafonctionnels ayant de préférence un point d'ébullition supérieur à 1 50°C sous la pression normale si on envisage un amorçage radicalaire thermique. De préférence, on choisit parmi les (méth)acrylates monofonctionnels, l'isobornylacrylate, l'isobornyiméthacrylate, le dicyclopentényloxyéthylméthacrylate, le méthoxyéthylacrylate, l'éthoxyéthylméthacrylate, l'isooctylacrylate, le 2-éthylhexylméthacrylate, le nonylméthacrylate, le nonylacrylate, le laurylméthacrylate.

On ne sortirait pas du cadre de l'invention en utilisant des mono-, di- ou tri(méth)acrylates métalliques. A titre d'illustration de tels monomères, on peut citer les di-acrylates et di-méthacrylates de zinc, comme par exemple les produits SR 416 et SR 365 commercialisés par la société Cray Valley.

Avantageusement, les plastifiants sont choisis parmi les phtalates de dialkyle et d'alkylbenzyle, les sébaçates d'alkyle, les adipates d'alkyle.

Les additifs peuvent être des additifs classiques connus de l'homme de l'Art tels que anti-oxydant, anti-UV, stabilisant radicalaire. La formulation peut également éventuellement être chargée par des charges minérales connues comme telles par l'homme de l'Art. A titre d'exemple, on peut citer les carbonates de calcium, la silice, le kaolin. La formulation peut également être additivée de pigments.

Les amorceurs radicalaires peuvent être des peroxydes classiques dont on assure la décomposition et donc la production de radicaux libres par voie thermique, par exemple le ditertiobutylperoxyde, le dicumylpéroxyde, le perbenzoate de tertiobutyle, le 2,5 diméthyl 2,5bis (ditertiobutylperoxy)hexane, soit des mélanges bicomposants de peroxydes et de co-amorceurs (par exemple, amines tertiaires, sels de cobalt) qui assurent la production à température ambiante des radicaux libres, soit de sels photo amorceurs aptes à générer des radicaux libres sous irradiation sous rayonnement Ultra-Violet ou par Bombardement d'Electrons (Electron Beam (EB)).

Selon le type d'amorceur utilisé, les formulations selon l'invention seront du type monocomposant (thermique ou photochimique) ou bicomposant (chimique).

L'invention a aussi trait à un procédé de préparation de la composition, caractérisé en ce qu'on condense l'oligomère de diène à terminaison hydroxyle mélangé éventuellement à l'allongeur de chaîne avec le composé polyisocyanate puis on ajoute ensuite les autres constituants pour obtenir ladite composition liquide de basse viscosité.

La présente invention sera mieux comprise grâce aux exemples de réalisation suivants, à titre purement illustratif et non limitatif.

### Partie expérimentale

### 1) Constituants utilisés et définitions des abréviations :

Le polydiène-polyol utilisé est le Poly Bd®R 45HT commercialisé par la Société ELF ATOCHEM, et de formule : 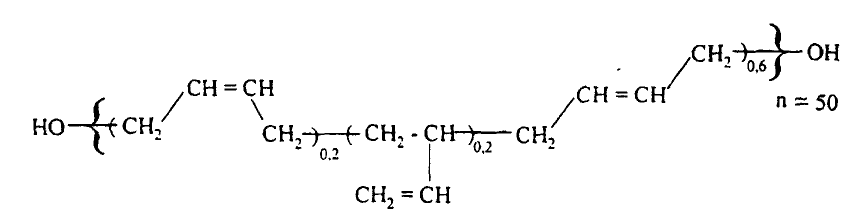 Mₙ = 2 800 g/mol
Indice d'OH = 0,83 meq/g
Viscosité à 30°C = 5 000 mPa.s

Le TMPTMA est le Triméthylolpropanetriméthacrylate (M = 338 g/mol) commercialisé par la Société ELF ATOCHEM.

Le TPGDA est le Tripropylène Glycol DiAcrylate (M = 300 g/mol) commercialisé par la Société CRAY VALLEY.

Le Luperox® P est le perbenzoate de tertiobutyle commercialisé par la Société ELF ATOCHEM.

Le CRAYNOR® 965 est un oligomère uréthane acrylate polyester aliphatique difonctionnel ayant une viscosité de 20 à 30 Pa.s à 50°C, commercialisé par la Société CRAY VALLEY.

Le MAISOBOR est le Méthacrylate d'isobornyle (M = 222 g/mol) commercialisé par la Société ELF ATOCHEM.

Le DCPOEMA est le Méthacrylate de dicyclopentényloxyéthyle (M = 262 g/mol) commercialisé par la Société ELF ATOCHEM.

L'EHD est le 2-éthyl-1,3-hexanediol commercialisé par la Société HÜLS.

Le MDI (4,4'-diphénylméthanediisocyanate) utilisé est le grade Isonate 125 commercialisé par la Société DOW.

Le DOA est l'Adipate de dioctyle commercialisé par la Société SIDOBRE SINOVA.

Le DBTL est le Dibutyl dilaurate d'étain commercialisé par la Société AIR PRODUCTS.

Le TBC est le para-tertio Butyl catéchol.

Le DHBP est le 2,5-Diméthyl-2,5-bis (ditertio-butyl peroxy) hexane commercialisé par la Société ELF ATOCHEM.

### 2) Caractérisation des formulations et des matériaux réticulés

### a) Propriétés mécaniques :

L'allongement et la contrainte à la rupture des matériaux réticulés sont déterminés selon la norme DIN 53504 ; la dureté des matériaux est déterminée selon la norme DIN 53505.

### b) Retrait linéaire pendant la réticulation :

Il correspond au rapport (Lo-Lf)/Lo exprimé en % ; Lo et Lf étant respectivement les dimensions avant et après réticulation du matériau déposé dans un moule ayant une dimension interne Lo.

### c) Résistance à la pliure

Elle correspond à l'aptitude d'une plaque de 2 mm d'épaisseur à subir sans dommage une pliure à 180°C.

### d) Viscosité des formulations

Elles sont mesurées grâce à un viscosimètre Brookfield type RVT modèle DV3 équipé d'un dispositif permettant un bon contrôle de la température.

### e) Stabilité des formulations

Elle correspond à leur aptitude à ne pas gélifier lors d'un traitement thermique de 4 heures à 60°C.

### f) Pertes de masses

Elles correspondent aux pertes de masses exprimées en % lors soit d'un vieillissement thermique de 4 heures à 60°C (au stockage), soit lors de la polymérisation (1 heure à 160°C).

### g) Rhéologie

La transition vitreuse Tg (en °C), la tangente delta à la transition vitreuse Tg et le Module d'élasticité E' à 20°C (en MPa) sont déterminés sur un spectomètre mécanique Type RSA2, commercialisé par la Société Rhéométrics.

Les déterminations sont effectuées sur des éprouvettes de dimensions 22 mm x 6 mm x 2 mm, sollicitées en traction dynamique avec une pulsation de 10 rad/s ce qui correspond à une fréquence de 1,66 Hz.

Les manipulations sont effectuées entre -120°C et +150°C à la fréquence telle que mentionnée ci-dessus.

A partir des courbes on a accès au module E' à 20°C, à la tgδ et à la Tg.

### h) Résistance à l'hydrolyse

Prise de masse : elle correspond à l'augmentation de la masse (exprimée en %) d'une éprouvette lors d'un vieillissement humide de 2 heures dans l'eau à 100°C.

### i) Propriétés électriques

La rigidité (kV/mm) est déterminée selon la norme ASTM D 419.

La résistivité surfacique (Ω) est déterminée selon la norme ASTM D 257.

La résistivité volumique (Ω.cm) est déterminée selon la norme ASTM D 257.

La permittivité (1 kHz) est déterminée selon la norme ASTM D 150.

La valeur de Tan delta (1 kHz) est déterminée selon la norme ASTM D 150.

### Exemple de préparation de compositions selon la présente invention

### a) Préparation

On mélange le Poly Bd®R 45HT avec l'EHD et le MDI selon les proportions décrites dans le tableau 1.

La condensation a lieu de la manière générale suivante pour conduire à un prépolymère uréthane :

L'oligomère de diène à terminaisons hydroxyle, éventuellement le diol court, et le polyisocyanate sont mélangés sous agitation dans un réacteur à la température ambiante, puis le mélange est maintenu sous agitation pendant 1 heure avant d'être recueilli sous la forme d'un prépolymère uréthane. On rajoute ensuite les autres constituants pour obtenir la composition à base de prépolymère selon la présente invention.

Le Tableau I suivant rassemble les caractéristiques des exemples 1 à 3 des prépolymères uréthane ainsi préparés.

**Tableau I**

| Prépolymère | A exemple 1 en parties en poids | B exemple 2 en parties en poids | C exemple 3 en parties en poids |
|---|---|---|---|
| Poly Bd®R 45HT | 100 | 100 | 100 |
| 2-éthyl-1,3-hexanediol | 12,1 | 6,05 | 0 |
| MDI 125 | 14,1 | 9,37 | 4,68 |
| Viscosité à 30°C (P) | 3 260 | 2 450 | 1 670 |
| Viscosité à 60°C (P) | 286 | 220 | 275 |

A l'aide des trois prépolymères ci-dessus A, B, C, on réalise les six compositions figurant dans le tableau II suivant :

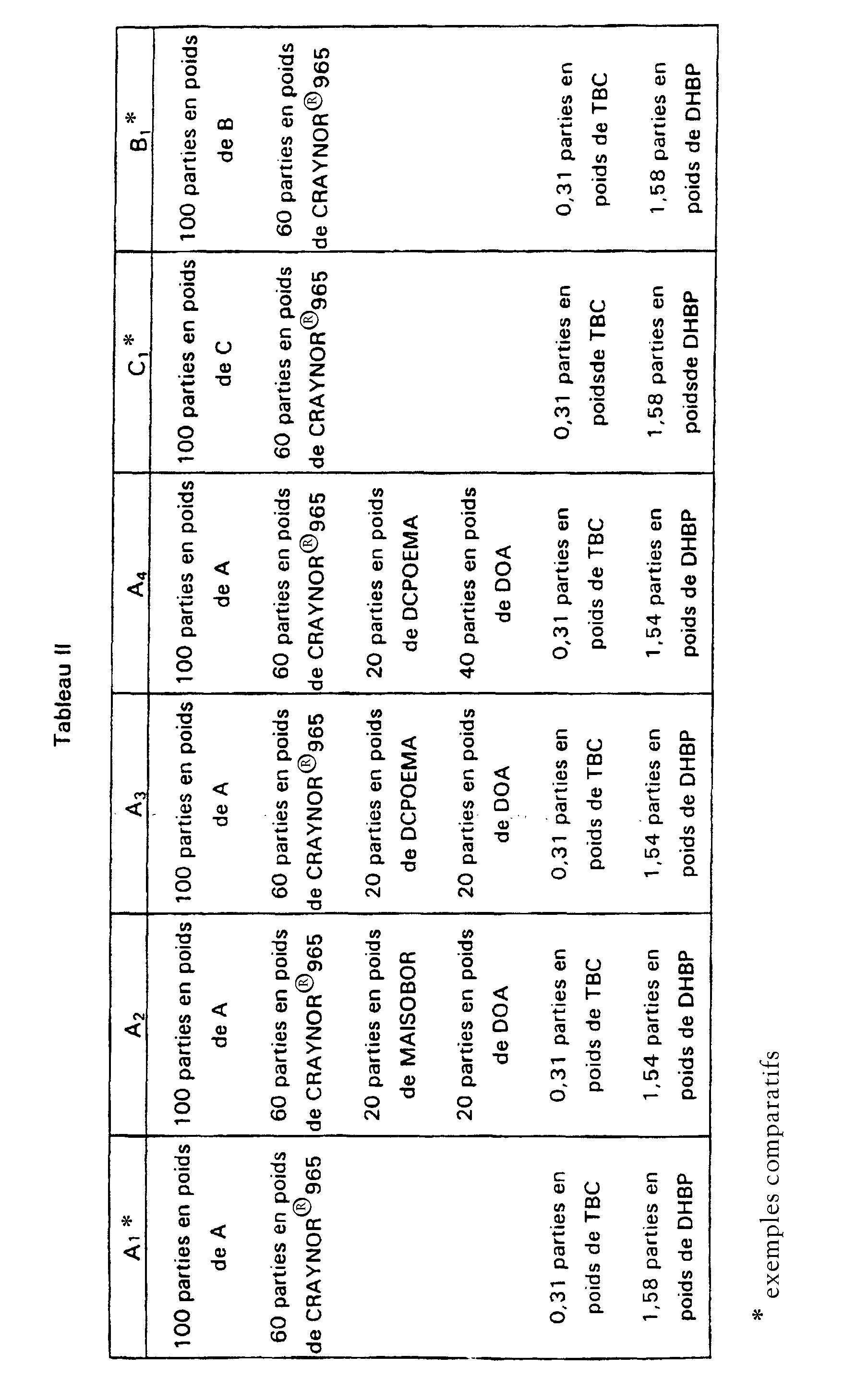

Les six compositions A₁, A₂, A₃, A₄, B₁, C₁ sont réticulées pour donner des polymères correspondants poly A₁, poly A₂ ou poly A₃. La réticulation est effectuée en coulant la composition Aₙ dans un moule ayant une épaisseur intérieure de 2 mm puis en plaçant le moule ainsi garni dans une étuve ventilée pendant une heure à 160°C.

A titre de comparaison, on prépare la composition suivante établie selon l'enseignement général de JP-A-06287249.

R : 100 parties en poids de Poly Bd®R 45HT
5 parties en poids de TMPTMA
25 parties en poids de TPGDA
1 partie en poids de Luperox® P
0,2 parties en poids de Parabutylcatéchol
1 partie en poids de Diphénylisodécylphosphate

On réticule à 160°C pendant 1 h pour donner le polymère poly R.

Les propriétés des polymères obtenus apparaissent dans le Tableau III suivant :

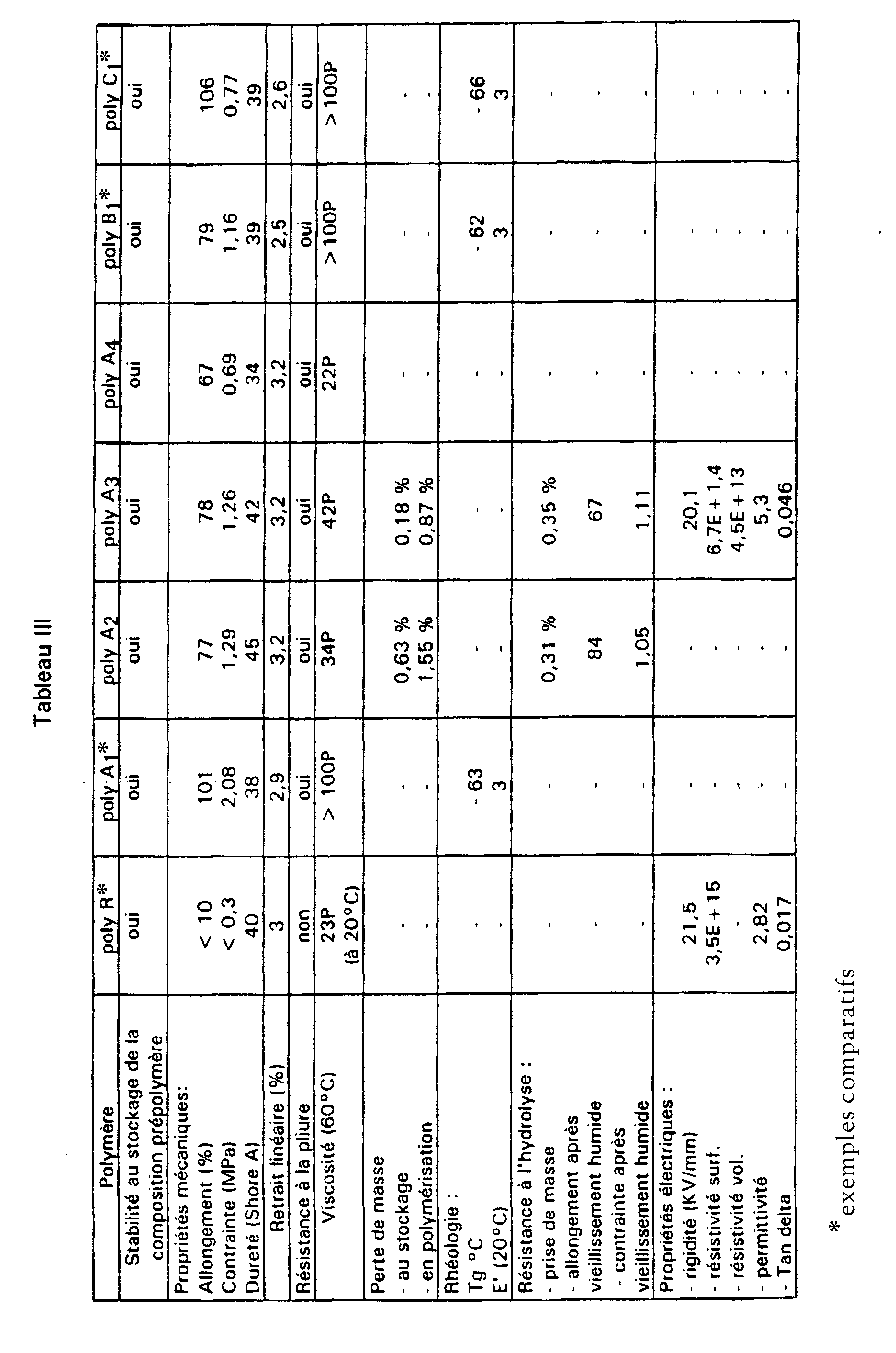

Le Tableau III montre bien que les polymères obtenus selon l'invention sont des élastomères avec des allongements à la rupture pouvant atteindre 100 %, une bonne résistance à la pliure, une basse transition vitreuse nécessaire pour conserver une bonne souplesse à basse température, une résistance à l'hydrolyse excellente et de bonnes propriétés diélectriques.

Les compositions selon l'invention peuvent trouver par exemple des applications dans le domaine de la protection contre les agressions extérieures (thermique, mécanique, hydrolytique, environnementale, chimique) de composants électriques ou électroniques.

On peut citer à titre d'exemple l'encapsulation électrique de circuits électriques, la protection d'épissures, le vernissage de bobinages type condenseur.

Les compositions selon l'invention peuvent être utilisées d'une manière générale comme revêtements de surfaces métalliques ou de surfaces en matières plastiques.

## Revendications

1. Composition stable au stockage à base d'un prépolymère uréthane et apte à donner un élastomère par réticulation radicalaire thermique ou photochimique, **caractérisée par** la teneur des constituants suivants :
- de 100 parties en poids du prépolymère uréthane obtenu par condensation d'un oligomère de diène à terminaison hydroxyle, mélangé éventuellement à un allongeur de chaîne, avec un composé polyisocyanate dans un rapport en poids tel que le rapport de la concentration molaire des groupes isocyanate (-N=C=O) sur la concentration molaire des groupes hydroxyles (-OH) soit de 0,05 à q, cette valeur q étant choisie de façon à ne pas atteindre la gélification du prépolymère,
- de 1 à 200 parties en poids d'oligomère(s) acrylate(s) ayant des masses molaires en nombre Mn allant de 100 à 5 000 g/mol,
- de 1 à 100 parties en poids de monomère(s) acrylate(s),
- de 0 à 100 parties en poids de plastifiants,
- de 0 à 5 parties en poids d'additifs,
- de 0,1 à 5 parties en poids d'amorceur radicalaire.

2. Composition selon la revendication 1, **caractérisée en ce que** la teneur des constituants est :
- de 100 parties en poids dudit prépolymère uréthane,
- de 50 à 100 parties en poids d'oligomère(s) acrylate(s),
- de 10 à 50 parties en poids de monomère(s) acrylate(s),
- de 0 à 100 parties en poids de plastifiants,
- de 0 à 5 parties en poids d'additifs,
- de 0,1 à 5 parties en poids d'amorceur radicalaire.

3. Composition selon la revendication 1 ou 2, **caractérisée en ce que** l'allongeur de chaîne est un diol.

4. Composition selon la revendication 3, **caractérisée en ce que** le diol peut être présent jusqu'à 50 parties en poids.

5. Composition selon l'une des revendications 1 à 4, **caractérisée en ce que** le polybutadiène à terminaison hydroxyle est du PolyBd R 45HT.

6. Composition selon l'une des revendications 1 à 5, **caractérisée en ce que** le composé polyisocyanate est du 4,4'-diphenylméthanediisocyanate (MDI).

7. Composition selon la revendication 6, **caractérisée en ce que** le rapport de la concentration molaire NCO sur la concentration molaire OH est de 0,05 à 0,60.

8. Procédé de préparation de la composition stable selon l'une des revendications 1 à 7, **caractérisé en ce qu'**on condense l'oligomère de diène à terminaison hydroxyle mélangé éventuellement à l'allongeur de chaîne avec le composé polyisocyanate puis on ajoute ensuite les autres constituants pour obtenir ladite composition liquide de basse viscosité.

9. Polymère élastomérique obtenu par réticulation thermique ou photochimique d'une composition selon l'une des revendications 1 à 7.

## Claims

1. Composition based on a urethane prepolymer which is stable on storage and which is capable of giving an elastomer by thermal or photochemical radical crosslinking, **characterized by** the content of the following constituents:
- 100 parts by weight of the urethane prepolymer obtained by condensation of a diene oligomer comprising a hydroxyl ending, optionally mixed with a chain extender, with a polyisocyanate compound in a ratio by weight such that the ratio of the molar concentration of the isocyanate groups (-N=C=O) to the molar concentration of the hydroxyl groups (-OH) is from 0.05 to q, this value q being chosen so as not to achieve gelling of the prepolymer,
- from 1 to 200 parts by weight of acrylate oligomer(s) having number average molecular weight Mₙ ranging from 100 to 5000 g/mol,
- from 1 to 100 parts by weight of acrylate monomer(s),
- from 0 to 100 parts by weight of plasticizers,
- from 0 to 5 parts by weight of additives,
- from 0.1 to 5 parts by weight of radical initiator.

2. Composition according to Claim 1, **characterized in that** the content of the constituents is:
- 100 parts by weight of the said urethane prepolymer,
- from 50 to 100 parts by weight of acrylate oligomer(s),
- from 10 to 50 parts by weight of acrylate monomer(s),
- from 0 to 100 parts by weight of plasticizers,
- from 0 to 5 parts by weight of additives,
- from 0.1 to 5 parts by weight of radical initiator.

3. Composition according to Claim 1 or 2, **characterized in that** the chain extender is a diol.

4. Composition according to Claim 3, **characterized in that** the diol can be present at up to 50 parts by weight.

5. Composition according to one of Claims 1 to 4, **characterized in that** the polybutadiene comprising a hydroxyl ending is PolyBd R 45HT.

6. Composition according to one of Claims 1 to 5, **characterized in that** the polyisocyanate compound is diphenylmethane 4,4'-diisocyanate (MDI).

7. Composition according to Claim 6, **characterized in that** the ratio of the NCO molar concentration to the OH molar concentration is from 0.05 to 0.60.

8. Process for the preparation of the stable composition according to one of Claims 1 to 7, **characterized in that** the diene oligomer comprising a hydroxyl ending, optionally mixed with the chain extender, is condensed with the polyisocyanate compound and then the other constituents are subsequently added in order to obtain the said liquid composition of low viscosity.

9. Elastomeric polymer obtained by thermal or photochemical crosslinking of a composition according to one of Claims 1 to 7.

## Patentansprüche

1. Lagerstabile Zusammensetzung auf Basis eines Urethan-Vorpolymerisats, die durch thermische oder fotochemische Radikalvernetzung ein Elastomer ergeben kann, **gekennzeichnet, durch** den folgenden Gehalt der Bestandteile:
- 100 Gewichtsteile des Urethan-Vorpolymerisats, das **durch** Kondensation eines Dienoligomers mit Hydroxylendpunkt, das eventuell mit einem Kettendehner gemischt ist, mit einer Polyisocyanatverbindung in einem derartigen Gewichtsverhältnis hergestellt wird, dass das Verhältnis der Molkonzentration der Isocyanat-Gruppen (-N=C=O) zur Molkonzentration der HydroxylGruppen (-OH) 0,05 bis zum Wert q beträgt, wobei dieser Wert q derart gewählt wird, dass die Gelierung des Vorpolymerisats nicht erreicht wird,
- 1 bis 200 Gewichtsteile von Acrylat-Oligomer(en), die molare Massen in der Anzahl Mn von 100 bis 5 000 g/mol aufweisen,
- 1 bis 100 Gewichtsteile von Acrylat-Monomer(en),
- 0 bis 100 Gewichtsteile von Plastifizierungsmitteln,
- 0 bis 5 Gewichtsteile von Zusätzen,
- 0,1 bis 5 Gewichtsteile eines Radikalaktivators.

2. Zusammensetzung nach Anspruch 1, **dadurch gekennzeichnet, dass** der Gehalt der Bestandteile folgender ist:
- 100 Gewichtsteile des Urethan-Vorpolymerisats,
- 50 bis 100 Gewichtsteile von Acrylat-Oligomer(en),
- 10 bis 50 Gewichtsteile von Acrylat-Monomer(en),
- 0 bis 100 Gewichtsteile von Plastifizierungsmitteln,
- 0 bis 5 Gewichtsteile von Zusätzen,
- 0,1 bis 5 Gewichtsteile eines Radikalaktivators.

3. Zusammensetzung nach Anspruch 1 oder 2, **dadurch gekennzeichnet, dass** der Kettendehner ein Diol ist.

4. Zusammensetzung nach Anspruch 3, **dadurch gekennzeichnet, dass** das Diol in bis zu 50 Gewichtsteilen vorhanden sein kann.

5. Zusammensetzung nach einem der Ansprüche 1 bis 4, **dadurch gekennzeichnet, dass** das Polybutadien mit Hydroxylendpunkt PolyBd R45HT ist.

6. Zusammensetzung nach einem der Ansprüche 1 bis 5, **dadurch gekennzeichnet, dass** die Polyisocyanat-Verbindung 4,4'-Diphenylmethandiisocyanat (MDI) ist.

7. Zusammensetzung nach Anspruch 6, **dadurch gekennzeichnet, dass** das Verhältnis der Molkonzentration NCO zur Molkonzentration OH 0,05 bis 0,60 beträgt.

8. Verfahren zur Herstellung der stabilen Zusammensetzung nach einem der Ansprüche 1 bis 7, **dadurch gekennzeichnet, dass** das Dienoligomer mit Hydroxylendpunkt, das eventuell mit dem Kettendehner gemischt ist, mit der Polyisocyanat-Verbindung kondensiert wird und dann die anderen Bestandteile beigegeben werden, um die flüssige Zusammensetzung mit geringer Viskosität zu erhalten.

9. Elastomeres Polymer, das durch thermische oder fotochemische Vernetzung einer Zusammensetzung nach einem der Ansprüche 1 bis 7 erhalten wird.
